# EUROPÄISCHE PATENTSCHRIFT

(11) **EP 2 801 490 B1**
(45) Veröffentlichungstag und Bekanntmachung des Hinweises auf die Patenterteilung: **11.04.2018**
(21) Anmeldenummer: 14001592.6
(22) Anmeldetag: 06.05.2014
(51) Int. Cl.: B60D 1/52, B60D 1/48

(54) **Kupplungshalterung für eine Anhängekupplung**
Coupling receiver for a trailer coupling
Support d'embrayage pour un attelage

(30) Priorität: 08.05.2013 DE 102013008328
(43) Veröffentlichungstag der Anmeldung: 12.11.2014
(73) Patentinhaber: WESTFALIA - Automotive GmbH, 33378 Rheda-Wiedenbrück (DE)
(72) Erfinder: Angermann, Kay, 04720 Döbeln (DE)
(74) Vertreter: Patentanwälte Bregenzer und Reule Partnerschaftsgesellschaft mbB

(56) Entgegenhaltungen:
- WO-A1-93/14948
- US-A1- 2005 086 992
- US-A1- 2006 225 264

## Beschreibung

Die Erfindung betrifft eine Kupplungshalterung zum Halten eines Kuppelelements eines Kupplungsarms einer Anhängekupplung oder eines Lastenträgers für ein Kraftfahrzeug gemäß dem Oberbegriff des Anspruchs 1.

Eine derartige Kupplungshalterung ist beispielsweise in WO 93/14948 A1 erläutert.

Die verschiedenen Umfangskonturen, d.h. Konturen, die sich quer zur Längserstreckungsrichtung erstrecken, sind beispielsweise Haltekonturen für ein Steckende eines Kupplungsarmes, Verstärkungskonturen oder dergleichen.

Eine derartige Kupplungshalterung geht beispielsweise aus DE 295 01 733 U1 hervor. Die Kupplungshalterung besteht in der Regel aus einem Gussteil oder einem Schmiedeteil, ist also relativ aufwändig in der Fertigung.

Es ist daher die Aufgabe der vorliegenden Erfindung, eine einfach herstellbare, jedoch praktische und belastbare Anhängekupplung bereitzustellen.

Zur Lösung der Aufgabe ist eine Anhängekupplung gemäß der technischen Lehre des Anspruchs 1 vorgesehen. Zur Lösung der Aufgabe ist ferner ein Verfahren gemäß der Erfindung vorgesehen.

Es ist dabei ein Grundgedanke, dass der Rohrabschnitt durch eine oder mehrere Umformungen geeignete Umformungskonturen und dabei entsprechend auch Umfangskonturen erhält, die beispielsweise zum Halt weiterer Komponenten, zum Beispiel eines Formschluss-Halteelements, dienen. Des Weiteren können die Umformungskonturen und Umfangskonturen die Kupplungshalterung verstärken und oder auch zu Montagezwecken dienen, d.h. dass die Umformungskontur/Umfangskontur beispielsweise zur Montage an einem Querträger einer Trägerstruktur oder einer Trägeranordnung ausgestaltet oder ausgebildet ist.

Der Rohrkörper besteht zweckmäßigerweise aus Blech, z.B. Stahlblech.

An dieser Stelle sei bemerkt, dass im Rahmen der Erfindung selbstverständlich auch Umformungskonturen gebildet werden können, die sich in Längserstreckungsrichtung oder schräg zur Längserstreckungsrichtung erstrecken, beispielsweise Längsrippen oder dergleichen. Auch solche Umformungskonturen können zu einer Verstärkung der Kupplungshalterung beitragen oder auch beispielsweise einen formschlüssigen Halt des Kuppelelements ermöglichen. Eine sich in Längserstreckungsrichtung erstreckende Umformungskontur kann beispielsweise eine Drehfixierung ermöglichen.

Die mindestens eine Umfangskontur erstreckt sich also vorzugsweise quer oder rechtwinkelig zu der Längserstreckungsrichtung. Selbstverständlich wäre es möglich, dass die Umformungskontur oder Umfangskontur nicht exakt rechtwinkelig zur Längserstreckungsrichtung verläuft, sondern auch schräg dazu verlaufen kann.

Bevorzugt ist es vorgesehen, dass eine jeweilige Umfangskontur, vorzugsweise die mindestens eine in Umfangsrichtung verlaufende Umfangskontur, aber auch zum Beispiel mindestens eine in Längsrichtung oder Längserstreckungsrichtung der Kupplungshalterung verlaufende Umfangskontur einen formschlüssigen oder kraftschlüssigen Halt oder beides für das Kuppelelement bereitstellen.

Die Umfangskontur oder Umformungskontur als solche kann also bereits dazu dienen, das Kuppelelement fest in oder an der Kupplungshalterung zu halten.

Aber auch eine Verstärkung im Bereich der mechanisch stärker belasteten Bereiche der Kupplungshalterung ist vorteilhaft. Erfindungsgemäß ist vorgesehen, dass die Kupplungshalterung mindestens ein Formschluss-Halteelement aufweist, das mit dem aus dem Rohling hergestellten Bestandteil der Kupplungshalterung fest verbunden ist. Das Formschluss-Halteelement befindet sich beispielsweise im Innenraum der Kupplungshalterung, also der Halteaufnahme. Es ist aber auch möglich, dass das Formschluss-Halteelement außen an der Kupplungshalterung angeordnet ist, beispielsweise auch stirnseitig im Bereich einer Einstecköffnung.

Das mindestens eine Formschluss-Halteelement besteht zweckmäßigerweise aus einem härteren Material als der Rohling. Somit kann also beispielsweise ein hartes, durch Formschluss oder Kraftschluss beanspruchtes Bauteil durch das Formschluss-Halteelement bereitgestellt werden, während die übrigen, mechanisch möglicherweise auch weniger belasteten Komponenten der Kupplungshalterung aus dem Rohling bzw. dem Material des Rohlings bestehen, zum Beispiel aus Blech.

Wie erwähnt, dann kann das mindestens eine Formschluss-Halteelement in einem Innenraum der Halteaufnahme oder auch an einem Außenumfang des Rohrabschnitts, der die Halteaufnahme für das Kuppelelement begrenzt, angeordnet sein.

An dieser Stelle sei erwähnt, dass selbstverständlich auch mehrere Formschluss-Halteelemente vorgesehen sein können.

Das mindestens eine Formschluss-Halteelement kann beispielsweise mit dem aus dem Rohling hergestellten Bestandteil der Kupplungshalterung oder einer sonstigen Komponente der Kupplungshalterung stoffschlüssig verbunden sein, beispielsweise angeklebt, angeschweißt oder dergleichen.

Eine weitere zum stoffschlüssigen verbinden alternative oder ergänzende Maßnahme zur ortsfesten Fixierung eines Formschluss-Halteelements kann beispielsweise sein, dass das Formschluss-Halteelement in den Rohrkörper eingepresst wird.

Zusätzlich zu einer oder beiden der beiden vorgenannten Fixier-Maßnahmen für das Formschluss-Halteelement oder alternativ dazu ist es auch vorteilhaft, wenn das mindestens eine Formschluss-Halteelement durch die mindestens eine Umformungskontur und/oder Umfangskontur an der Kupplungshalterung, insbesondere bezüglich der Längserstreckungsrichtung, fixiert ist. Selbstverständlich kann auch eine Fixierung quer zur Längserstreckungsrichtung, zum Beispiel eine Drehfixierung, anhand der mindestens einen Umformungskontur oder Umfangskontur hergestellt sein.

Es ist also möglich, dass eine einzige Umformungskontur das mindestens eine Formschluss-Halteelement hält. Es können zu diesem Zweck aber auch noch weitere Umformungskonturen, z.B. Umfangskonturen und/oder sich in Längserstreckungsrichtung erstreckende Längskonturen, vorgesehen sein.

Bevorzugt ist eine Fixierung des mindestens einen Formschluss-Halteelements an der Kupplungshalterung durch mindestens zwei Umfangskonturen, nämlich durch eine erste und eine zweite Umfangskontur, die aneinander entgegengesetzten ersten und zweiten Seiten des Formschluss-Halteelements vorgesehen sind. Eine oder beide Umfangskonturen können als Umformungskonturen hergestellt sein.

Die mindestens eine Umfangskontur erstreckt sich zweckmäßigerweise ringförmig über den gesamten Innenumfang oder Außenumfang oder beides der Kupplungshalterung. Es ist aber auch möglich, dass die Umfangskontur sich nur über einen Teilumfang erstreckt, d.h. dass sich die Umfangskontur nur über ein Winkelsegment oder Teilsegment des gesamten Umfangs erstreckt. Es können beispielsweise Ringsegment-Umfangskonturen als die oder eine Umfangskontur vorgesehen sein. Es ist aber auch möglich, dass sich mehrere, über den Umfang der Kupplungshalterung erstreckende, Umformungskonturen oder Umfangskonturen vorgesehen sind, beispielsweise die erwähnten Teilsegmente oder auch punktförmige Umformungs-Umfangskonturen.

Zweckmäßigerweise ist vorgesehen, dass die mindestens eine Umfangskontur zu einem formschlüssigen und/oder kraftschlüssigen Halten des Kuppelelements ausgestaltet ist oder ausgebildet ist oder beides.

Die mindestens eine Umfangskontur kann auch einen Falz oder einen Flansch bilden. Beispielsweise steht die mindestens eine Umformungskontur oder Umfangskontur nach innen in der Art eines Falzes oder Flansches in die Halteaufnahme hinein. Auf diesem Wege wird eine Verstärkung gebildet. Es ist aber auch möglich, dass sich die Umformungskontur oder Umfangskontur oder einen Teil derselben, zum Beispiel ein Wandabschnitt, nach außen erstreckt oder am Außenumfang der Kupplungshalterung herum angeordnet ist und dort einen Kragen bildet. Auch hier wird eine Verstärkung erzielt.

Die mindestens eine Umformungskontur umfasst zweckmäßigerweise mindestens einen Wandabschnitt, der einem benachbarten Wandabschnitt des Rohrkörpers gegenüberliegt. Beispielsweise ist es möglich, dass der Wandabschnitt flächig oder auch punktförmig und/oder linienförmig an dem benachbarten Wandabschnitt des Rohrkörpers anliegt.

Die Kupplungshalterung umfasst zweckmäßigerweise mindestens ein gehärtetes Element. Bevorzugt umfasst die Kupplungshalterung mindestens einen gehärteten Abschnitt oder Bereich. Der die mindestens eine Umformungskontur oder Umfangskontur umfassende Rohrkörper ist zweckmäßigerweise zumindest teilweise gehärtet. Beispielsweise ist der Bereich der Umformungskontur gehärtet, insbesondere, aber nicht nur, wenn er dazu dient, das Kuppelelement kraftschlüssig und/oder formschlüssig zu halten.

Der Rohling umfasst zweckmäßigerweise einen Rohrkörper oder ein Halbzeug. Bevorzugt ist der Rohling aus Metallblech. Es ist dabei möglich, dass das Halbzeug bereits eine rohrförmiges Metall-Blech ist. Es ist aber auch möglich, dass der Rohling eine Platine umfasst, aus der dann der Rohrkörper, der durch Umformung eine Umfangskontur erhält oder mehrere Umform-Umfangskonturen erhält, geformt wird. Beispielsweise kann die Platine zunächst die Umformungskontur erhalten und dann zu dem Rohrkörper geformt werden. Anhand einer Klebe- und/oder Schweißverbindung oder einer sonstigen Verbindung können die beiden aneinander angrenzenden Wandabschnitte des Rohrkörpers miteinander verbunden werden.

Die Halteaufnahme umfasst zweckmäßigerweise eine Steckaufnahme zum Einstecken des Kuppelelements, das zu diesem Zweck einen Steckvorsprung aufweist oder bildet.

Es ist aber auch möglich, dass die Halteaufnahme eine Lageraufnahme für eine Lagerkomponente der Anhängekupplung oder des Lastenträgers bildet. Das Kuppelelement kann in diesem Fall beispielsweise ein Lagerteil sein, das in der Halteaufnahme schwenkbar, verschieblich oder beides gelagert ist. Zum Beispiel ist es möglich, dass auf diesem Wege das Kuppelelement zusammen mit dem Kupplungsarm zwischen einer Gebrauchsstellung, in der die Anhängekupplung zum Ankuppeln eines Anhängers nach hinten vor das Heck des Kraftfahrzeugs vorsteht, und einer Nichtgebrauchsstellung, in welcher der Kupplungsarm näher zur Karosserie des Kraftfahrzeugs hin verstellt ist, beweglich gelagert ist.

Wie bereits erwähnt ist es vorteilhaft, wenn die Halteaufnahme einen beispielsweise formschlüssigen und/oder kraftschlüssigen Halt des Kuppelelements an oder in der Halteaufnahme ermöglicht.

Bevorzugt ist es, wenn die Kupplungshalterung einen Bestandteil einer Trägeranordnung für eine Anhängekupplung oder einen Lastenträger bildet. Die Kupplungshalterung ist an einem zur Befestigung am Heck des Kraftfahrzeugs vorgesehenen Querträger befestigt. Die Trägeranordnung kann auch weitere Trägerkomponenten, zum Beispiel Seitenträger zur Befestigung an dem Kraftfahrzeug, umfassen. Zwischen den Seitenträgern erstreckt sich der Querträger. Die Seitenträger müssen aber nicht vorgesehen sein.

Bei dem Kraftfahrzeug handelt es sich vorzugsweise um ein Kraftfahrzeug mit einem Verbrennungsmotor und/oder einem Elektromotor. Bevorzugt ist das Gebiet der Personenkraftfahrzeuge.

Die Kupplungshalterung wird zweckmäßigerweise anhand einer Steckverbindung mit der Trägeranordnung verbunden, zum Beispiel dem Querträger. Dazu hat die Kupplungshalterung mindestens einen Steckvorsprung oder mindestens eine Steckaufnahme, die mit an der Trägeranordnung vorgesehenen Träger-Steckaufnahmen und Träger-Steckvorsprüngen korrespondieren und zusammenwirken. Bevorzugt ist es dabei, wenn zu der Steckverbindung noch ein Stoffschluss kommt, d.h. dass der Steckvorsprung des einen Teils in der Steckaufnahme des anderen Teils zweckmäßigerweise stoffschlüssig festgelegt ist.

Der mindestens eine Steckvorsprung ist zweckmäßigerweise von einer Einsteckseite her in die Steckaufnahme eingesteckt und steht vor die andere, zu der Einsteckseite entgegengesetzten freien Seite des Bauteils nicht vor. Beispielsweise ist er mit der freien Seite oder der Oberfläche der freien Seite bündig. Es ist auch möglich, dass der Steckvorsprung hinter die freie Seite oder Oberfläche der freien Seite zurück steht, sozusagen unterbündig ist. In der Steckaufnahme bleibt dann eine Vertiefung zurück. Diese Vertiefung eignet sich vorteilhaft zur Aufnahme von Verbindungsmaterial, mit dem der mindestens eine Steckvorsprung mit der Steckaufnahme stoffschlüssig verbunden ist. Mithin ist also die Vertiefung zumindest teilweise mit dem Verbindungsmaterial, beispielsweise einem Schweißmaterial, Lot, Klebstoff oder dergleichen sozusagen verfüllt. In jedem Fall ist es zweckmäßig, wenn der Steckvorsprung nicht vor die freie Seite des anderen Bauteils vorsteht. Dadurch wird eine sehr günstige, Platz sparende Konstruktion geschaffen.

Ein vor die Steckaufnahme vorstehender Abschnitt des mindestens einen Steckvorsprungs ist zweckmäßigerweise in der Art einer Biegelasche quer zur Längserstreckungsrichtung oder Steckachse der Steckaufnahme umgebogen oder umgefalzt. Der umgebogene Abschnitt ist zweckmäßigerweise an der der Einsteckseite entgegengesetzten Seite des Bauteils angeordnet. Aber auch von der Einsteckseite her gesehen ist es möglich, dass der Steckvorsprung umgekantet oder umgefalzt wird. In jedem Fall ist eine besonders günstige formschlüssige Verbindung möglich.

Ein außerhalb der Steckaufnahme befindlicher Abschnitt des Steckvorsprungs ist mit dem anderen Bauteil zweckmäßigerweise stoffschlüssig verbunden. Beispielsweise ist der Steckvorsprung an der Einsteckseite stoffschlüssig mit dem anderen Bauteil verbunden. Aber auch an der der Einsteckseite entgegengesetzten Seite des Bauteils kann der Steckvorsprung mit diesem Bauteil stoffschlüssig, beispielsweise anhand einer Klebverbindung, Lötverbindung oder Schweißverbindung, verbunden sein.

Bevorzugt ist es, wenn der bereits erwähnte, in der Art einer Biegelasche umgebogene Abschnitt, der sich außerhalb der Steckaufnahme befindet, mit dem anderen Bauteil stoffschlüssig verbunden ist. Dort kann aber auch eine Verbindung mittels einer Schraube, eines Niets oder dergleichen vorgesehen sein.

Zweckmäßig ist es, wenn der mindestens eine Steckvorsprung an mindestens einer Innenfläche der Steckaufnahme, vorzugsweise an sämtlichen Innenflächen der Steckaufnahme, anliegt, beispielsweise flächig anliegt. Es ist aber auch möglich, dass der Steckvorsprung dort nur punktuell oder streifenförmig anliegt, was eine stoffschlüssige Verbindung mit beispielsweise Klebstoff oder Lot erleichtern kann. In den Zwischenräumen zwischen den Anlage-Vorsprüngen oder Anlage-Streifen des Steckvorsprungs kann das Bindematerial, zum Beispiel Klebstoff, Lot oder dergleichen, Platz finden.

Die Kupplungshalterung weist weiterhin vorteilhaft eine zur flächigen Anlage an einer Träger-Kontaktfläche der Trägeranordnung vorgesehene Kontaktfläche auf. Mithin liegt also die Kupplungshalterung an der Trägeranordnung, zum Beispiel deren Querträger, mit einer Kontaktfläche flächig an. Vor die Kontaktfläche steht der Steckvorsprung vor oder ist eine Steckaufnahme angeordnet und bildet eine Vertiefung. Der Steckvorsprung der Kupplungshalterung oder der Trägeranordnung sind zweckmäßigerweise als Steckzapfen und die Steckaufnahme der Kupplungshalterung oder der Trägeranordnung als Zapfenaufnahme ausgestaltete. Mithin ist also am einen Teil von Kupplungshalterung und Trägeranordnung ein Steckzapfen, am anderen Teil eine Zapfenaufnahme vorgesehen. Der Zapfen ist entlang einer Steckachse in die Zapfenaufnahme einsteckbar, so dass sich quer zu der Kontaktfläche erstreckende seitliche Widerlagerflächen des Steckvorsprungs und der Steckaufnahme miteinander im Eingriff sind.

Das erfindungsgemäße Verfahren sieht vorzugsweise bei einer Kupplungshalterung der eingangs genannten Art folgendes vor: Herstellung der mindestens einen Umfangskontur als eine Umformungskontur anhand einer Umformung eines Rohlings.

Die Umformung kann eines oder mehrere der nachfolgend erläuterten Verfahren umfassen, nämlich:
- Rollformen aus einem Rohr-Halbzeug und/oder
- Rollformen aus einer Platine mit anschließendem Längsschweißen einer Nut zur Bildung des Rohrkörpers und/oder
- Warmumformung und/oder Kaltumformung in einem Werkzeug und/oder
- Warmumformung und Kaltumformung und/oder
- Kaltfließpressen und/oder
- Hochdruckumformung

Das Längsschweißen umfasst z.B. ein Schmelzschweißverfahren und/oder ein Widerstandsschweißverfahren. Die Hochdruckumformung kann dabei eine Innenhochdruckumformung und/oder eine Außenhochdruckumformung umfassen, d.h. von der Halteaufnahme innen her oder von außen her. Es sind mehrere, verschiedenartigste Medien zu dieser Hochdruckumformung geeignet, zum Beispiel Wasser, Öl, Gas oder ein anderes Fluid.

Nachfolgend werden Ausführungsbeispiele der Erfindung anhand der Zeichnung erläutert. Es zeigen:
- Figur 1: eine perspektivische Schrägansicht von unten auf eine Anhängekupplung einschließlich einer Trägeranordnung und einer ersten Kupplungshalterung,
- Figur 2: eine seitliche Schnittdarstellung durch die Anordnung gemäß Figur 1 etwa entlang einer Schnittlinie A-A in Figur 1,
- Figur 3: eine perspektivische Schrägansicht auf die Anordnung gemäß Figur 1 von schräg oben,
- Figur 4: eine perspektivische Schrägansicht auf die Kupplungshalterung gemäß Figur 1,
- Figur 5: eine Schnittdarstellung der Kupplungshalterung und der Trägeranordnung gemäß Figur 3 entlang einer Schnittlinie B-B in Figur 3,
- Figur 6: eine Schnittdarstellung durch die Kupplungshalterung gemäß Figur 3 entlang einer Schnittlinie C-C,
- Figur 7: eine perspektivische Schrägansicht von schräg hinten oben auf eine weitere Anhängekupplung, die eine mithilfe eines Flansches befestigte Kupplungshalterung aufweist und von der in
- Figur 8: eine Schnittdarstellung entlang einer Schnittlinie D-D in Figur 7 dargestellt ist,
- Figur 9: eine perspektivische Schrägansicht auf eine weitere Anhängekupplung mit einer weiteren Kupplungshalterung von schräg hinten unten, von der in
- Figur 10: eine Schnittdarstellung entlang einer Schnittlinie E-E in Figur 9 gezeigt ist,
- Figur 11: eine perspektivische Schrägansicht auf die Kupplungshalterung der Anhängekupplung gemäß Figuren 9, 10,
- Figur 12: eine Schnittdarstellung durch die Kupplungshalterung gemäß Figur 9, etwa entlang einer Schnittlinie F-F,

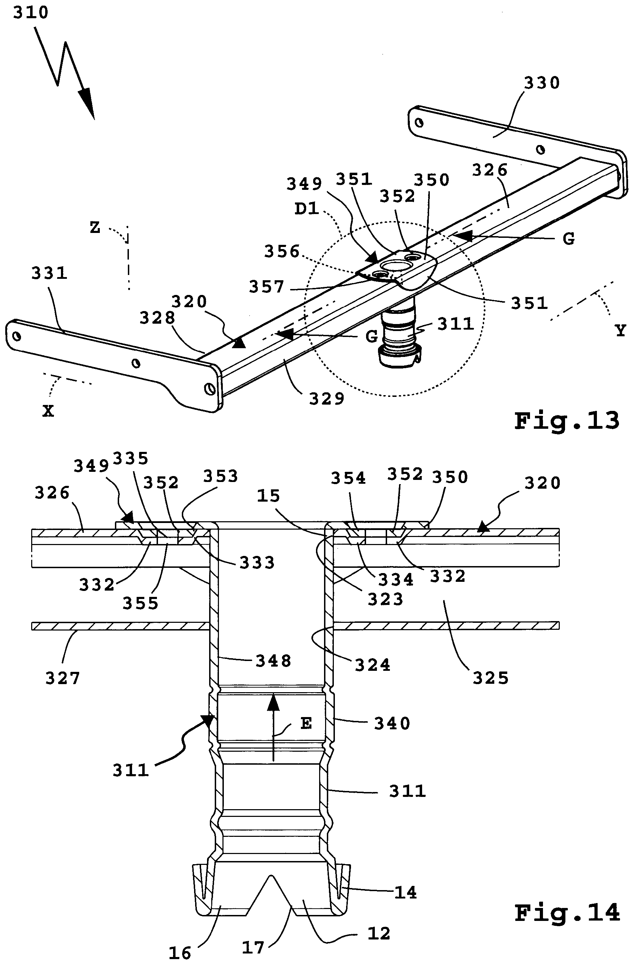

- Figur 13: eine weitere Anhängekupplung gemäß der Erfindung mit einer anhand eines Flansches befestigten Kupplungshalterung von schräg hinten oben, von der in
- Figur 14: eine Schnittdarstellung eines Ausschnittes D1 gemäß einer Linie G-G in Figur 13 dargestellt ist,
- Figur 15: eine perspektivische Schrägansicht auf eine weitere Anhängekupplung mit einer anhand einer Steckverbindung befestigten Kupplungshalterung, von der in
- Figur 16: ein Ausschnitt D2 entsprechend einer Draufsicht von frontal oben vergrößert dargestellt ist,
- Figur 17: eine perspektivische Schrägansicht auf die Anhängekupplung gemäß Figur 15 von schräg unten,
- Figur 18: eine Schnittdarstellung durch die Anhängekupplung gemäß Figur 15, etwa entlang einer Schnittlinie H-H in Figur 16,
- Figur 19: eine Schnittdarstellung durch die Anhängekupplung gemäß Figur 17 etwa entlang einer Schnittlinie I-I in Figur 17,
- Figur 20: eine perspektivische Schrägansicht auf die Kupplungshalterung der Anhängekupplung gemäß Figur 15, von der in
- Figur 21: eine Schnittdarstellung, etwa entlang einer Schnittlinie K-K in Figur 16 dargestellt ist,
- Figur 22: eine schematische Darstellung einer ersten Werkzeuganordnung bei der Bearbeitung einer erfindungsgemäßen Kupplungshalterung,
- Figur 23: eine schematische Darstellung einer zweiten Werkzeuganordnung bei der Bearbeitung einer erfindungsgemäßen Kupplungshalterung, und
- Figur 24: eine schematische Darstellung einer dritten Werkzeuganordnung bei der Bearbeitung einer erfindungsgemäßen Kupplungshalterung.

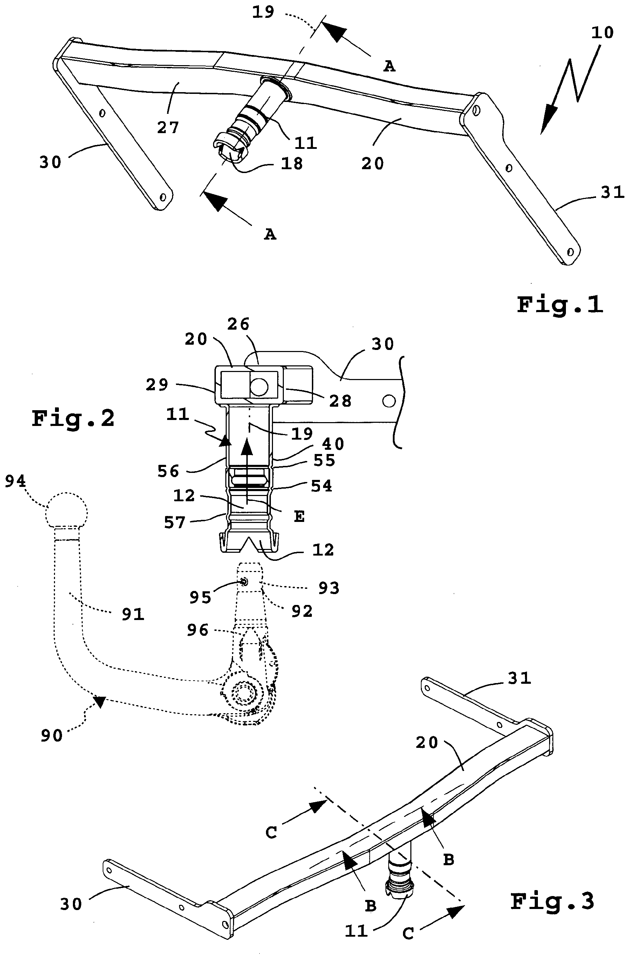

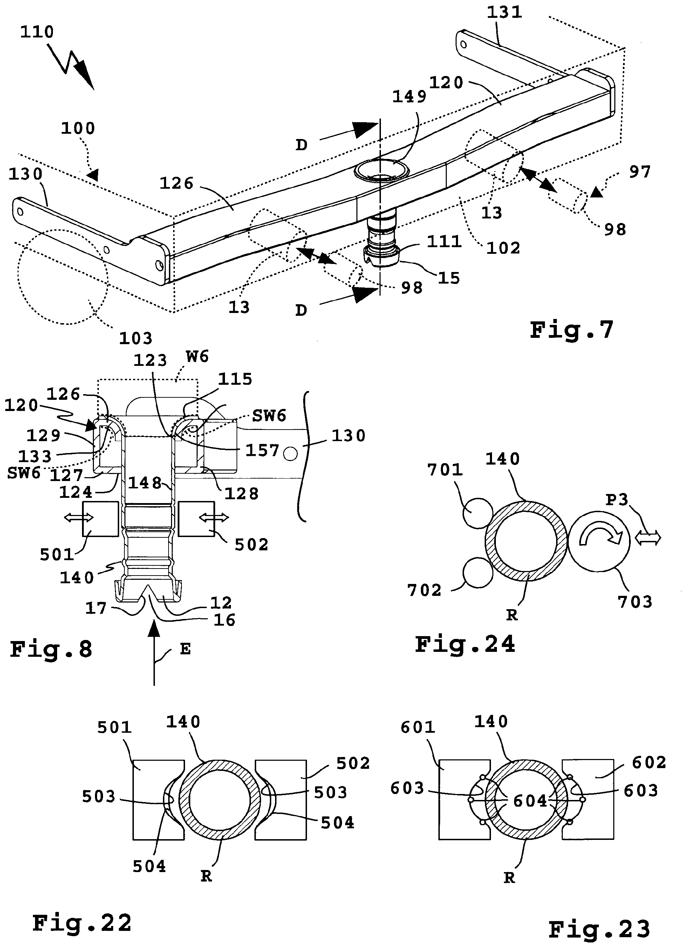

Eine Trägeranordnung 10 gemäß Figuren 1-3 umfasst einen Querträger 20, der sich hinten am Heck eines beispielhaft in Figur 7 dargestellten Kraftfahrzeugs 100 quer erstreckt, das heißt hinter der Karosserie am Heck 102 angeordnet ist und in der Regel durch einen Stoßfänger verborgen ist. Der Querträger 20 wird von Seitenträgern 30 und 31 gehalten, die sich seitlich an der Karosserie entlang erstrecken und daran befestigt sind. Die Trägeranordnung 10 baut besonders leicht, beispielsweise weil die beiden Seitenträger 30, 31 aus Blech bestehen. Auch der Querträger 20 ist leicht. Er besteht z.B. aus einem Hohlprofil mit einem rechteckigen oder runden Querschnitt. Vorliegend hat der Querträger 20 eine bei Gebrauch obere Wand 26, eine untere Wand 27 sowie in Fahrtrichtung gesehen eine vordere Wand 28 und eine hintere Wand 29. Die Wände 26-29 begrenzen einen Hohlraum, nämlich einen Innenraum 25 des Querträgers 20.

Zu diesem Leichtbaukonzept passend ist eine Kupplungshalterung 11 ausgestaltet, die sich nach unten vor eine untere Wand 27 des Querträgers 20 erstreckt. Die Kupplungshalterung 11 dient zur Aufnahme eines Kuppelelements 93 einer Anhängekupplung 90, die einen Kupplungsarm 91 mit einem Steckende 92 sowie am anderen Ende ein Kuppelstück 94, zum Beispiel einer Kugel, umfasst.

Die Kupplungshalterung 11 umfasst eine Halteaufnahme 12 in Gestalt einer Steckaufnahme 18, die zum Einstecken des Steckendes 92 dient. Das Steckende 92 bildet oder umfasst das Kuppelelement 93 zur Ankupplung an die Kupplungshalterung 11.

Die Kupplungshalterung 11 umfasst einen Rohrkörper 40, dessen in der Zeichnung unterer Endbereich eines Rohrabschnitts 57 ein Einsteckende 14 aufweist und dessen in der Zeichnung oberer Bereich ein Montageende 15 zur Montage und Befestigung an dem Querträger 20 bildet.

An dieser Stelle sei erwähnt, dass die vertikale Anordnung bzw. Orientierung der Längserstreckungsrichtung 19 der Halteaufnahme 12 nur eine Option darstellt.

Am Beispiel der nur schematisch dargestellten Kupplungshalterung 13 (Figur 7) wird deutlich, dass auch eine horizontale Orientierung der Längserstreckungsrichtung möglich ist oder auch eine schräg verlaufende Längserstreckungsrichtung. Die Kupplungshalterung 13 kann nämlich erfindungsgemäß wie beispielsweise eine oder jede der Kupplungshalterungen 11, 111, 211, 311, 411 hergestellt sein. Die Kupplungshalterung 13 dient zur Befestigung und zum Halten eines Kuppelelements 98 eines Lastenträgers 97. Exemplarisch sind zwei Kupplungshalterungen 13 dargestellt, wobei auch eine, zum Beispiel zentral mittige Lastenträger-Kupplungshalterung, ausreichen würde. Mithin sind also in einem Querabstand zwei Kupplungshalterungen 13 vorgesehen, so dass der Lastenträger 97 gabelförmig am Kraftfahrzeug 100 befestigt werden kann.

Der Rohrkörper 40 weist am Einsteckende 14 eine Einstecköffnung 16 auf, in die das Steckende 92 einsteckbar ist. Die Einstecköffnung 16 wird von einem Wandabschnitt 41 einer Umfangswand 56 umgeben, dessen Durchmesser etwas weiter ist als an einem darüberliegenden Wandabschnitt 43, der quasi eine Einschnürung oder Taillierung darstellt. Der Wandabschnitt 41 verläuft etwa konisch sich von der Einstecköffnung 16 her nach innen, sich in Einsteckrichtung E verjüngend. Zwischen den Wandabschnitten 41 und 43 befindet sich eine Stufe 42, die ebenfalls in Einsteckrichtung E nach schräg innenverlaufend ist, also konisch.

Darüber erstreckt sich ein Wandabschnitt 44, der wiederum einen etwas größeren Durchmesser aufweist. Der Wandabschnitt 44 hat also einen größeren Innendurchmesser als der Wandabschnitt 43 und umfasst einen nach radial außen vorstehenden Vorsprung 45.

Darüber erstreckt sich ein weiterer, zylindrischer Wandabschnitt 46, dessen Durchmesser etwa demjenigen des Wandabschnitts 43 entspricht.

In Einsteckrichtung E neben dem Wandabschnitt 46 befindet sich ein sich in Einsteckrichtung E konisch erweiternder Wandabschnitt 47, oberhalb dessen wiederum ein zylindrischer Wandabschnitt 48 vorgesehen ist.

Der Wandabschnitt 48 seinerseits wiederum geht in einen nach radial außen sich erstreckenden Kragen oder Flanschvorsprung 49 an einem Montageende 15 der Kupplungshalterung 11 über.

Die Stirnseite 50 des Flansches 49 ist an der unteren Wand 27 des Querträgers 20 befestigt, beispielsweise angeschweißt oder angeklebt oder beides. Somit kann die Hülse oder der Rohrkörper 40 in einfacher Weise am Querträger 20 befestigt werden.

Am freien Endbereich der Kupplungshalterung 11, nämlich um die Einstecköffnung 16 herum, erstreckt sich ein Kragen 51, der im Sinne einer Verstärkung der Kupplungshalterung 11 im Bereich der Einstecköffnung 16 wirkt. Der Kragen 51 umfasst einen unteren Bogenabschnitt 52 und einen sich davon weg erstreckenden Wandabschnitt 53, der dem Wandabschnitt 41 gegenüberliegt.

Die Wandabschnitte 41 und 53 liegen beim Ausführungsbeispiel nicht flächig aneinander an. Das wäre aber ohne weiteres möglich.

Es wäre auch möglich, dass ein Spalt oder eine Nut zwischen den beiden Wandabschnitten 41 und 53 mit einem Verbindungsmaterial V, zum Beispiel Lot, verbunden ist, oder dass diese Nut mit einem verstärkenden Material, zum Beispiel Epoxid-Harz oder einem anderen Kunststoff oder dergleichen, verfüllt ist.

Im Innenraum der Halteaufnahme 12 befindet sich ein Formschluss-Halteelement 60. Das Formschluss-Halteelement 60 umfasst einen Ringkörper 61, der beispielsweise aus einem gegenüber dem Rohrkörper 40 härteren Material, zum Beispiel einem gehärteten Stahl, besteht. Der Rohrkörper 40 an sich besteht nämlich beispielsweise aus Stahlblech.

Nun ist es möglich, das Formschluss-Halteelement 60 mit seiner Umfangswand 62 an die Innenseite des Wandabschnitts 48, mithin also in die Halteaufnahme 12, anzukleben oder anderweitig stoffschlüssig festzulegen.

Vorliegend jedoch sind zusätzlich zur stoff schlüssigen Fixierung oder alternativ dazu Umfangskonturen 55 und 54 vorgesehen, die nach radial innen in die Halteaufnahme 12 vorstehen und sich an einer ersten Stirnseite 64 und einer zweiten Stirnseite 63 des Formschluss-Halteelements 60 abstützen.

Am Innenumfang des Formschluss-Halteelements 60 befindet sich eine Formschlussaufnahme 65, beispielsweise eine Ringnut. Diese Formschlussaufnahme 65 dient zusammen mit Formschlusskonturen 17, z.B. Formschlussaufnahmen, die unten an den Wandabschnitten 41 und 53 vorgesehen sind und sich vom freien Endbereich der Kupplungshalterung 11 in Einsteckrichtung E verjüngen, zum formschlüssigen und kraftschlüssigen Halten des Kupplungsarms 91. In die Formschlussaufnahme 65 des Formschluss-Halteelements 60 greifen Fixierelemente 95, zum Beispiel Kugeln, des Kupplungsarms 91 ein. Die Fixierelemente 95 sind in an sich bekannter Weise aus einem Innenraum des Kupplungsarms 91 dort beispielsweise einen Sperrbolzen oder einen sonstigen Verdrängerkörper nach radial außen in die Formschlussaufnahmen 65 hinein verdrängbar. Die dreieckförmigen oder keilförmigen Formschlusskonturen 17 dienen zur Aufnahme von komplementären Formschlusskonturen 96, die am Kupplungsarm 91 vorgesehen sind.

Die Formschlusskonturen 17, 96 sind beispielsweise prismenförmig oder dreieckförmig und dienen zum einen als Verdrehsicherung dahingehend, dass der Kupplungsarm 91 drehfest in der Halteaufnahme 12 gehalten wird, zum anderen dienen sie auch als eine Fixierung, die zusammen mit den Fixierelementen 95, zum Beispiel den Kugeln, für einen festen Halt des Kupplungsarms 91 an der Kupplungshalterung 11 sorgen, z.B. im Sinne eines Verspannens in Einsteckrichtung E.

Die Keilschrägen oder Formschlusskonturen 17 sind in beiden Wandabschnitten 53 und 41 vorgesehen, d.h. in einem insgesamt verstärkten Bereich der Kupplungshalterung 11.

Eine vorteilhafte Maßnahme kann vorsehen, dass beispielsweise das Einsteckende 14, zum Beispiel der Flanschvorsprung 49 und der Wandabschnitt 41, gehärtet sind, insbesondere im Bereich der Formschlusskonturen 17.

Der Kragen 51, der Vorsprung 45, der daneben liegende Wandabschnitt 46, der quasi eine Taillierung darstellt, sowie die beiden Umfangskonturen 54, 55 und der Flanschvorsprung 49 sind Umfangskonturen, das heißt nach radial innen oder nach radial außen vor den Rohrkörper 40 vorstehende Wandabschnitte, die als Umformungskonturen U1-U6 ausgeprägt sind. Beispielsweise sind diese Umformungskonturen U1-U6 anhand von Umformwerkzeugen hergestellt, beispielsweise Prägewerkzeugen, Rollen, Stempel oder dergleichen.

Der Rohling R ist beispielsweise zunächst eine Blech-Hülse.

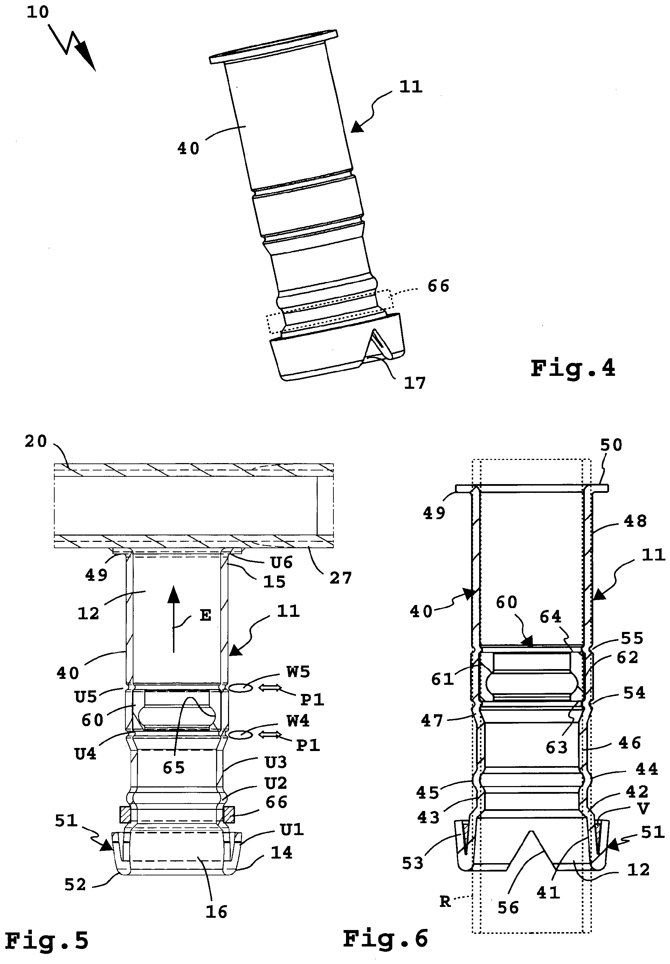

Umformwerkzeuge W4 und W5, die beispielsweise von radial außen (Pfeile P1) an einen Rohling R herangeführt werden, um die beiden Umfangskonturen 54, 55 herzustellen, sind in Figur 5 exemplarisch dargestellt.

Es versteht sich, dass nicht nur eine radial innere, sondern auch eine radial äußere Verstärkung vorteilhaft sein kann. Beispielsweise kann außen am Wandabschnitt 43 eine Verstärkungsmanschette 66 vorgesehen sein. Die Verstärkungsmanschette kann durch die Herstellung des Flanschvorsprungs 49, nachdem bereits der Vorsprung 45 als Widerhalt hergestellt ist, am Rohrkörper 40 und somit der Kupplungshalterung 11 ortsfest festgelegt sein.

Eine Kupplungshalterung 111 der Trägeranordnung 110 entspricht, zumindest was den unteren Bereich einschließlich des nicht detailliert dargestellten Formschluss-Halteelements 60 angeht, der Kupplungshalterung 11. Innovativ ist jedoch deren Befestigung und Ausgestaltung zu dieser Befestigung an dem Querträger 120, der an sich sonst dem Querträger 20 entspricht und von Seitenträgern 130, 131 in der Art der Seitenträger 30, 31 gehalten wird.

Der Querträger 120 hat an seiner oberen Wand 126 eine Durchtrittsöffnung 123 zur Aufnahme eines Montageendes 115 der Kupplungshalterung 111. Das Montageende 115 umfasst einen Flanschvorsprung 149 eines Rohrkörpers 140. Der Flanschvorsprung 149 könnte nunmehr wie der Flanschvorsprung 49 ausgestaltet sein, d.h. in der Art eines rechtwinkelig von der darunter liegenden Wand oder dem darunterliegenden Wandabschnitt 148 abstehenden Kragens.

Der Flanschvorsprung 149 verläuft jedoch trichterförmig im Sinne einer Aufweitung. Vom freien Ende des Montageendes 115 her wird der Flanschvorsprung im Durchmesser immer kleiner, bis er in den zylindrischen Wandabschnitt 148 (entsprechend dem Wandabschnitt 48) übergeht.

Der Flanschvorsprung 149 hat an seiner Unterseite eine Ausrundung in der Art einer Innenkehle 157, die mit einem korrespondierend rund verlaufenden Wandabschnitt 133 der oberen Wand 126 korrespondiert. Der Wandabschnitt 133 ist ebenfalls trichterförmig, so dass der Flanschvorsprung 149 mit seiner Unterseite flächig an der Oberseite des trichterförmigen Wandabschnitts 133 anliegt. Dadurch wird die Kupplungshalterung 111 quasi von oben her von der Wand 126 abgestützt.

Weiterhin wirkt die Durchtrittsöffnung 123 im Sinne eines Zentrierens, d.h. dass die Kupplungshalterung 111 sich quasi in der Durchtrittsöffnung 123 zentriert.

Der zylindrische Wandabschnitt 148 befindet sich im Innenraum einer weiteren Durchtrittsöffnung 124 an der unteren Wand 127. Der Wandabschnitt 148 kann mit seinem Außenumfang formschlüssig am Innenumfang der Durchtrittsöffnung 124 anliegen. Der sich daran anschließende Teil der Kupplungshalterung 11 steht nach unten vor die untere Wand 127 vor.

Die Herstellung der Kupplungshalterung 111 kann beispielsweise durch ein Umformwerkzeug W6 erfolgen, das in der Art eines Prägestempels in das Montageende 115 eingreift und dieses nach radial außen im Sinne eines Trichters aufweitet. Ein Stütz Werkzeuge SW6 kann den Flanschvorsprung 149 während der Bearbeitung durch das Umformwerkzeug W6 abstützt.

Die Kupplungshalterung 211 der Trägeranordnung 210 entspricht im wesentlichen der Kupplungshalterung 11. Allerdings sind die Kupplungshalterungen 11 und 211 im Bereich der Einstecköffnung 16 unterschiedlich ausgestaltet. Anstelle des nach außen vorstehenden, z.B. umgebördelten, Kragens 51 ist an einem Rohrkörper 240 der Kupplungshalterung 211 ein Kragen 251 vorgesehen, dessen dem Wandabschnitt 241 (entsprechend dem Wandabschnitt 41) gegenüberliegender Wandabschnitt 253 im Innenraum der Halteaufnahme 12 vorgesehen ist. Zwischen den Wandabschnitten 241 und 253 befindet sich der Bogenabschnitt 252 (entsprechend dem Bogenabschnitt 52), der allerdings nach radial innen in Richtung der Halteaufnahme 12 umgebogen ist.

Es wäre auch hier möglich, dass die einander gegenüberliegenden Wandabschnitte 241, 253 miteinander verbunden werden, beispielsweise miteinander verklebt, verschweißt oder dergleichen.

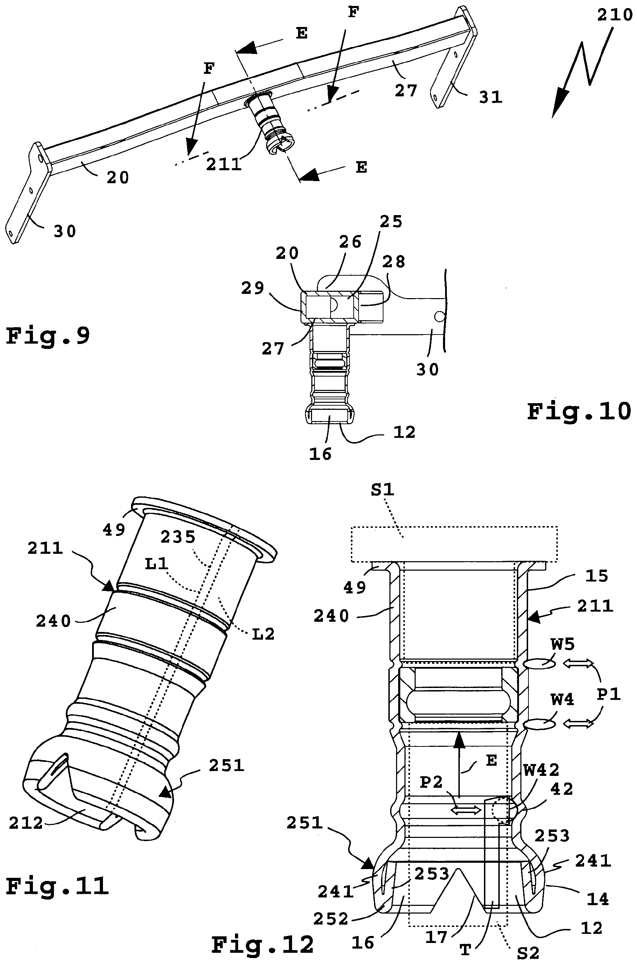

Anhand des Ausführungsbeispiels gemäß Figuren 9-12 sollen weitere Herstellungsverfahren erläutert werden. Beispielsweise könnte der Vorsprung 45 durch einen Umformwerkzeug W42 hergestellt werden, das von radial innen, d.h. von der Halteaufnahme 12 her, nach radial außen wirkt. Angedeutet ist dies durch einen Pfeil P2. Beispielsweise handelt es sich bei dem Umformwerkzeug W42 um eine Rolle oder Walze, die an einem Träger T angeordnet ist, der von radial innen an den Rohling R herangeführt wird und den von der Halteaufnahme 12 von innen her gesehen als Ringnut ausgeprägten Vorsprung 45 formt.

Weiterhin ist es zweckmäßig, dass das Formschluss-Halteelement 60 bei der Bearbeitung durch die Umformwerkzeuge W4 und W5 bezüglich der Längserstreckungsrichtung 19 fixiert wird, beispielsweise durch einen von dem Montageende 15 her in die Halteaufnahme 12 eingreifenden ersten Stützkörper S1 und einen von der Einstecköffnung 16 her in die Halteaufnahme 12 eingreifenden zweiten Stützkörper S2.

Die Trägeranordnung 310 umfasst einen Querträger 320, der eine in Fahrtrichtung vordere Wand 328, eine hintere Wand 329 sowie eine obere Wand 326 und eine untere Wand 327 aufweist. Seitlich wird der Querträger 120 von Seitenträgern 330, 331 gehalten. Eine optimierte Abstützung einer Kupplungshalterung 311 an der Trägeranordnung 10 in X-Richtung, Z-Richtung sowie in Y-Richtung wird folgendermaßen erzielt.

Die Kupplungshalterung 311 entspricht im wesentlichen, d.h. in ihrem unteren Bereich, der Kupplungshalterung 11. Allerdings ist oben anstelle des Flanschvorsprungs 49 ein Flanschvorsprung 349 vorgesehen, der einen oberen, sich an der Oberseite oder oberen Wand 326 abstützenden Wandabschnitt 350 sowie davon seitlich nach unten abstehende Wandabschnitte 351 aufweist. Die Wandabschnitte 350 und 351 sind zueinander winkelig bzw. über eine schräge, gebogene Kante miteinander verbunden, entsprechend dem außenseitigen Verlauf des Querträgers 320 zwischen seinen Wänden 328, 326 und 329.

Die Wandabschnitte 350, 351 können segmentiert sein, beispielsweise indem Kreissegmente oder Winkelsegmente 356 ausgeschnitten sind.

Jedenfalls stützt sich der Flanschvorsprung 349 mit seinem Wandabschnitt 350 oben am Querträger 320 sowie in Fahrtrichtung vorn und hinten mit den beiden seitlichen Wandabschnitten 351 ab.

Die an sich der Kupplungshalterung 11 entsprechende Kupplungshalterung 311 ist z.B. von oben her, d.h. von der Wand 326 her, durch eine an dieser angeordnete obere Durchtrittsöffnung 323 durchgesteckt und durchdringt mit ihrem dem Wandabschnitt 48 entsprechenden Wandabschnitt 348 ihres Rohrkörpers 340. Es ist auch möglich, dass die Kupplungshalterung 311 von unten her, d.h. durch die untere Durchtrittsöffnung 324 und dann durch die Durchtrittsöffnung 323 durchgesteckt ist und sodann erst der Flanschvorsprung 349 hergestellt wird.

Unabhängig vom jeweiligen Herstellungsverfahren ist jedenfalls strukturell vorgesehen, dass die Kupplungshalterung 311 Durchtrittsöffnungen 323, 324 am Querträger 320 durchdringt. Vorzugsweise ist die Kupplungshalterung 311 in den Durchtrittsöffnungen 323, 324 formschlüssig aufgenommen.

An der oberen Wand 326 sind Steckaufnahmen 332 vorgesehen. Diesen sind Steckvorsprünge 352 zugeordnet, die vor die der oberen Wand 326 zugeordnete Seite des Wandabschnitts 350 vorstehen, in der Zeichnung also nach unten. Die Steckvorsprünge 352 sind ebenso wie die Steckaufnahmen 332 in der Art von Prägekonturen ausgestaltet, d.h. sie haben Seitenwände 353, 333 sowie Bodenwände 354, 334, die zueinander winkelig, beispielsweise schräg sind. Die Bodenwände 354, 334 verlaufen parallel zum Wandabschnitt 350 sowie der oberen Wand 326, während die Seitenwände 353, 333 schräg dazu sind.

Die Seitenwände 353, 333 bilden Widerlagerflächen, die einen seitlichen Halt quer zu den Kontaktflächen, die sich um den Steckvorsprung 352 und die Steckaufnahme 332 herum befinden, gewährleisten. Die quer zu den Bodenwänden 354,334 verlaufenden Seitenwände 353, 333 halten die Kupplungshalterung 311 scherfest in der Ebene, in der sich neben den Steckvorsprüngen 352 und den Steckaufnahmen 332 Flächen des Wandabschnitts 350 sowie der oberen Wand 326 in Berührkontakt befinden, so dass ein zusätzlicher Halt in Y-Richtung sowie X-Richtung gegeben ist.

Für einen Halt in Z-Richtung könnten die Steckvorsprünge 352 in den Steckaufnahmen 332 fest geklebt sein, dort angeschweißt oder dergleichen.

Zweckmäßigerweise sind an den Bodenwänden 354, 334 Durchtrittsöffnungen 335, 355 vorgesehen, die im gesteckten Zustand der Steckvorsprünge 352 und der Steckaufnahmen 332 miteinander fluchten. Durch die Durchtrittsöffnungen 335 und 355 können beispielsweise Bolzen 357 durchgesteckt werden. Dabei ist es vorteilhaft, dass an der Oberseite der Steckvorsprünge 352 Vertiefungen vorgesehen sind, in denen die Köpfe derartiger Bolzen Platz finden, so dass die Köpfe nicht vor die Oberseite beispielsweise des Wandabschnitts 350 nach oben vorstehen.

Bei der Trägeranordnung 410 ist eine Kupplungshalterung 411 vorgesehen, die an einem Querträger 420 befestigt ist. Der Querträger 420 gleicht an sich den bereits erläuterten Querträgern 20, 120, 320, hat also eine obere Wand 426, eine untere Wand 427 sowie eine vordere und eine hintere Wand 428, 429.

An der Kupplungshalterung 411 sind an deren oberen, freien Stirnseite Steckvorsprünge 452 vorgesehen, die in Steckaufnahmen 432 an der oberen Wand 426 eindringen. Allerdings stehen die Steckvorsprünge 452 nicht vor die Steckaufnahmen 432 nach oben vor, sondern sind sozusagen unterbündig. Oberhalb der Steckvorsprünge 452 ist in den Steckaufnahmen 432 noch ein Raum 433 vorhanden, der mit einem stoffschlüssig verbindendenden Material, zum Beispiel mit Schweißgut, Lot oder dergleichen, verfüllt werden kann, z.B. dem Verbindungsmaterial V, um die Steckvorsprünge 452 in den Steckaufnahmen 432 stoffschlüssig festzulegen.

Die Kupplungshalterung 411 hat an ihrem Einsteckende 14 einen Verstärkungskörper 466, zum Beispiel einen Ring, der außen auf einen unteren Wandabschnitt 441, der die Einstecköffnung 16 umgibt, aufgesetzt ist. Der Wandabschnitt 441 verläuft sich zum freien Ende der Kupplungshalterung 411 hin verjüngend oder sich erweiternd. Der Verstärkungskörper 466 kann von außen auf den Außenumfang des Wandabschnitts 441 auf geschoben werden und dort vorzugsweise ortsfest festgelegt werden, zum Beispiel mittels einer stoffschlüssigen Verbindung, einer Schweißverbindung oder dergleichen.

Die Steckvorsprünge 452 sind als Kreissegmente ausgestaltet, die vor eine obere, freie Stirnseite des Montageendes 415 nach oben vorstehen. Zwischen den einzelnen Steckvorsprüngen 452 ist jeweils ein Rücksprung oder tiefer liegender Abschnitt 453 vorhanden, der stirnseitig an der Unterseite bzw. der dem Innenraum 25 zugewandten Seite der oberen Wand 426 flächig anliegt. Auch dort ist eine stoffschlüssige Verbindung zweckmäßig.

Die Steckaufnahmen 432 sind auch als Kreissegmente ausgestaltet, so dass die Steckvorsprünge 452 formschlüssig in die Steckaufnahmen 432 passen.

Die Kupplungshalterung 411 durchdringt eine untere Durchstecköffnung oder Durchtrittsöffnung 424 an der unteren Wand 427 des Querträgers 420. Ein Außenumfang der Kupplungshalterung 411 liegt an einem Innenumfang der Durchtrittsöffnung 424 vorzugsweise formschlüssig an. Auch hier ist eine stoffschlüssige, zusätzliche Verbindung vorteilhaft.

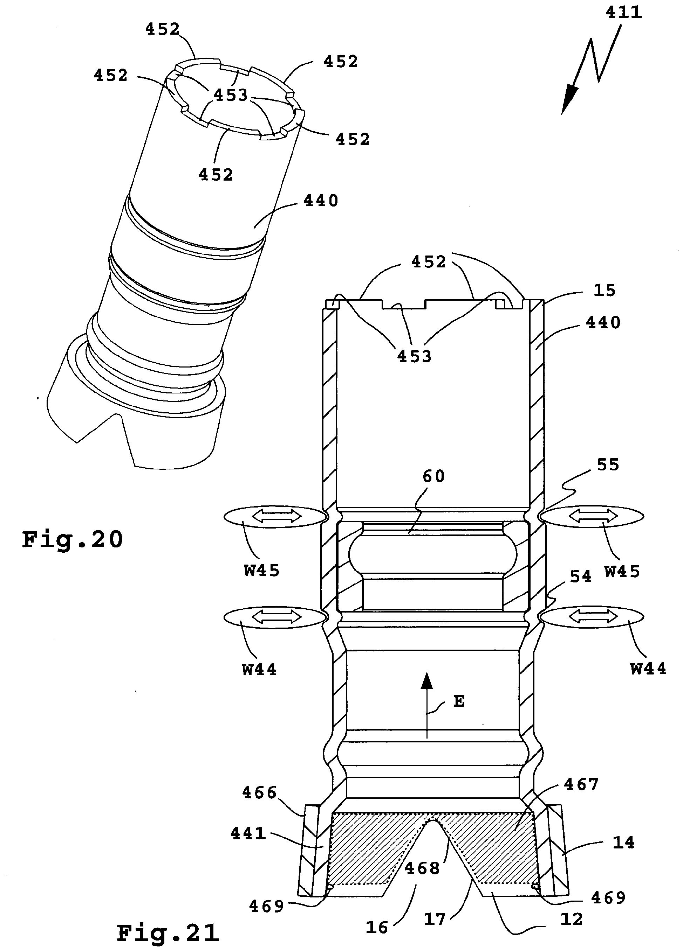

In der Figur 21 ist angedeutet, dass auch in einem Innenraum der Halteaufnahme 12 ein weiteres Formschluss-Halteelement vorgesehen sein kann, nämlich ein Formschluss-Halteelement 467. Dieses hat mit den Formschlusskonturen 17 korrespondierende Formschlusskonturen 468. Bei dem Formschluss-Halteelement 467 handelt es sich beispielsweise um einen Ring oder einen Ringkörper, dessen Außenumfang zweckmäßigerweise flächig am Innenumfang der Einstecköffnung 16 anliegt.

Der Formschluss-Halteelement 467 ist zweckmäßigerweise durch Umfangskonturen gehalten, beispielsweise durch Umfangskonturen 469, die nach radial innen in den Innenumfang der Halteaufnahme 12 vorstehen.

In Figur 21 ist auch ein Fertigungsverfahren oder Umform-Verfahren angedeutet. Beispielsweise sind Prägewerkzeuge W44 und W45, zum Beispiel Rollen, Stempel oder dergleichen, vorgesehen, die von außen her in der Art beispielsweise von einzelnen Prägeelementen auf den hier nicht dargestellten Rohling der Kupplungshalterung 411 einwirken und so die Umfangskonturen 54, 55 bilden, um das Formschluss-Halteelement 60 ortsfest festzulegen.

In den Figuren 22-24 sind noch weitere Fertigungsverfahren zur Herstellung einer erfindungsgemäßen Kupplungshalterung angedeutet. Beispielsweise können Prägebacken 501 und 502 von radial außen auf den Rohling R einwirken. Die beiden Prägebacken 501 und 502 haben Aussparungen 503, vor die ein Prägevorsprung 504, z.B. sichelförmig oder bogenförmig, nach radial innen vorsteht, um beispielsweise nur ein Teilsegment oder eine Teil-Umfangskontur zu prägen bzw. umzuformen.

Selbstverständlich können auch Prägekonturen oder Umformkonturen punktueller Art vorgesehen sein. Prägewerkzeuge 601 und 602 (Figur 23) haben beispielsweise an ihren Aussparungen 603, die an sich mit dem Außenumfang bzw. der Kontur des Rohlings R korrespondieren, einzelne Stifte oder sonstige Prägevorsprünge 604, die in einem Winkelabstand einzelne Umfangs-Umformungskonturen prägen, beispielsweise zum Halten des Formschluss-Halteelements 60.

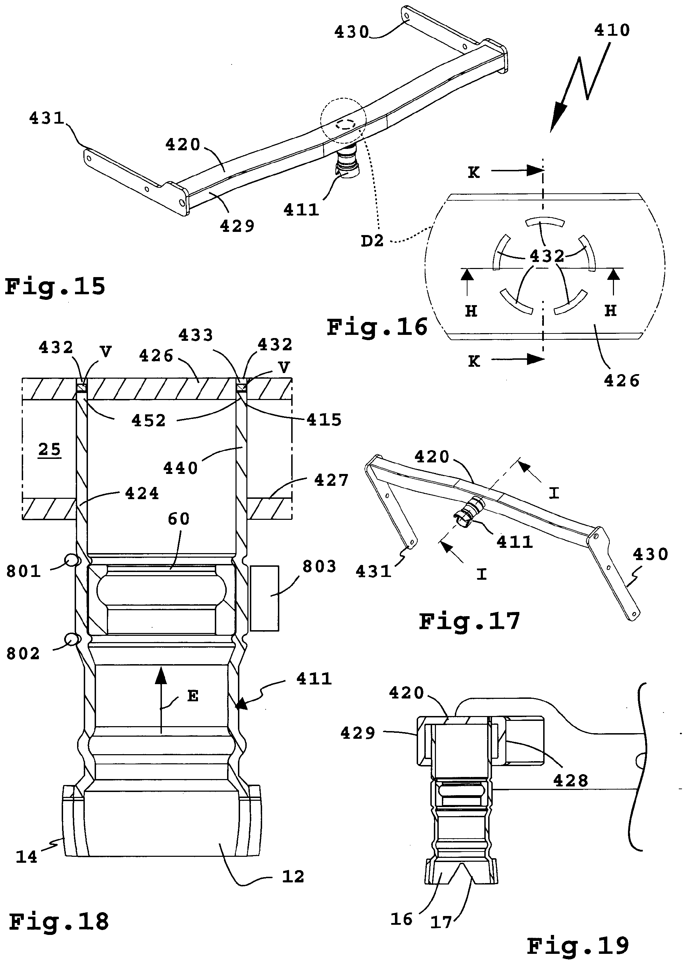

In Figur 24 und Figur 18 ist ein Roll-Verfahren bzw. eine Roll-Umformung angedeutet. Es ist beispielsweise möglich, dass von einer Seite her Stützrollen 701, 702 oder 801, 802 den Rohling R abstützen, während eine Prägerolle oder Druckrolle 703 oder 803, zum Beispiel eine Scheibe mit einem gerundeten oder flachen Außenumfang, entsprechend einem Pfeil P3 in Richtung des Rohlings R verstellt wird und dort eine Umfangs-Umformungskontur einprägt oder einrollt.

Wenn ein Rohling beispielsweise zunächst aus einem Flachmaterial besteht, bei dem anschließend dann über ein Umformverfahren die erfindungsgemäßen Umformungskonturen eingebracht werden, kann das Flachmaterial zu einem rohrförmigen Körper umgeformt und anschließend mit seinen dann einander gegenüberliegenden und miteinander zu verbindenden Längsenden L1 und L2 fest verbunden werden, beispielsweise vernietet, verschweißt, verklebt oder dergleichen. Dies ist anhand einer Schweißnaht 235 angedeutet.

## Patentansprüche

1. Kupplungshalterung zum Halten eines Kuppelelements (93, 98) eines Kupplungsarms einer Anhängekupplung oder eines Lastenträgers (97) für ein Kraftfahrzeug (100), mit einer durch eine Umfangswand (56) begrenzten Halteaufnahme (12) zum Halten des Kuppelelements (93, 98), mit einem einen Rohrabschnitt (57) aufweisenden Rohrkörper (40-440), der mindestens eine sich quer zu seiner Längserstreckungsrichtung (19) und entlang eines Innenumfangs oder Außenumfangs der Umfangswand (56) erstreckende, insbesondere eine Versteifung und/oder eine Formschlusskontur (17) für das Kuppelelement (93, 98) bildende Umfangskontur (54, 55) aufweist, wobei die mindestens eine Umfangskontur (54, 55) eine durch eine Umformung aus einem Rohling (R) gebildete Umformungskontur (U1-U6) ist, **dadurch gekennzeichnet, dass** sie mindestens ein ringförmiges Formschluss-Halteelement (60; 467) aufweist, das mit dem aus dem Rohling (R) hergestellten Bestandteil der Kupplungshalterung (11, 13; 111; 211; 311; 411) fest verbunden ist.

2. Kupplungshalterung nach Anspruch 1, **dadurch gekennzeichnet, dass** das mindestens eine Formschluss-Halteelement (60; 467) aus einem härteren Material besteht als der Rohling (R) und/oder dass das mindestens eine Formschluss-Halteelement (60; 467) in einem Innenraum der Halteaufnahme (12) oder an einem Außenumfang des Rohrabschnitts (57), der die Halteaufnahme (12) für das Kuppelelement (93, 98) begrenzt, angeordnet ist.

3. Kupplungshalterung nach einem der Ansprüche 1 oder 2, **dadurch gekennzeichnet, dass** das mindestens eine Formschluss-Halteelement (60; 467) durch die mindestens eine Umformungskontur (U1-U6) oder Umfangskontur (54, 55) an der Kupplungshalterung (11, 13; 111; 211; 311; 411), insbesondere bezüglich deren Längserstreckungsrichtung (19) und/oder quer zur Längserstreckungsrichtung (19), fixiert ist und/oder dass das mindestens eine Formschluss-Halteelement (60; 467) an einer ersten Seite durch eine erste Umfangskontur (54) und an einer zu der ersten Seite entgegengesetzten Seite durch eine zweite Umfangskontur (55) oder zwischen einer ersten und einer zweiten Umformungskontur (U1-U6) oder Umfangskontur (54, 55) fixiert ist.

4. Kupplungshalterung nach einem der vorhergehenden Ansprüche, **dadurch gekennzeichnet, dass** die mindestens eine Umformungskontur (U1-U6) oder Umfangskontur (54, 55) einen sich ringförmig über den gesamten Innenumfang oder Außenumfang der Kupplungshalterung (11, 13; 111; 211; 311; 411) oder nur über einen Teil derselben erstreckt und/oder dass die mindestens eine Umfangskontur (54, 55) zu einem formschlüssigen und/oder kraftschlüssigen Halten des Kuppelelements (93, 98) ausgestaltet und ausgebildet ist.

5. Kupplungshalterung nach einem der vorhergehenden Ansprüche, **dadurch gekennzeichnet, dass** die mindestens eine Umfangskontur (54, 55) nach innen in der Art eines Falzes oder Flansches (49; 149; 349) in die Halteaufnahme (12) hinein vorsteht oder nach außen einen Kragen der Halteaufnahme (12) bildend vorsteht.

6. Kupplungshalterung nach einem der vorhergehenden Ansprüche, **dadurch gekennzeichnet, dass** die mindestens eine Umfangskontur (54, 55) mindestens einen Wandabschnitt umfasst, der einem benachbarten Wandabschnitt des Rohrkörpers (40-440) gegenüberliegt, insbesondere an dem benachbarten Wandabschnitt des Rohrkörpers (40-440) flächig oder punktförmig oder linienförmig anliegt.

7. Kupplungshalterung nach einem der vorhergehenden Ansprüche, **dadurch gekennzeichnet, dass** die Kupplungshalterung (11, 13; 111; 211; 311; 411) mindestens einen gehärteten Abschnitt oder Bereich aufweist und/oder der Rohrkörper (40-440) eine sich entlang seiner Längserstreckungsrichtung (19) erstreckende Umfangskontur (54, 55) umfasst.

8. Kupplungshalterung nach einem der vorhergehenden Ansprüche, **dadurch gekennzeichnet, dass** der Rohling (R) ein Rohrkörper (40-440) und/oder ein Halbzeug und/oder aus Metall-Blech ist und/oder der Rohling (R) eine Platine umfasst.

9. Kupplungshalterung nach einem der vorhergehenden Ansprüche, **dadurch gekennzeichnet, dass** die Halteaufnahme (12) eine Steckaufnahme (332; 432) zum Einstecken des einen Steckvorsprungs (352, 452) aufweisenden oder bildenden Kuppelelements (93, 98) aufweist oder bildet und/oder das die Halteaufnahme (12) einen formschlüssigen Halt und/oder kraftschlüssigen Halt des Kuppelelements (93, 98) an der Halteaufnahme (12) oder in der Halteaufnahme (12) ermöglicht.

10. Kupplungshalterung nach einem der vorhergehenden Ansprüche, **dadurch gekennzeichnet, dass** die mindestens eine Umfangskontur (54, 55) einen zur Befestigung an einer an dem Trägeranordnung (10-410) vorgesehenen Halteflansch (49; 149; 349) umfasst, der nach außen vor den Außenumfang eines die Halteaufnahme (12) umfassenden Halteabschnitts der Kupplungshalterung (11, 13; 111; 211; 311; 411) vorsteht.

11. Kupplungshalterung nach einem der vorhergehenden Ansprüche, **dadurch gekennzeichnet, dass** sie einen Bestandteil einer Trägeranordnung (10-410) für eine Anhängekupplung oder einen Lastenträger (97), bildet und an einem zur Befestigung am Heck des Kraftfahrzeugs (100) vorgesehenen Querträger (20-420) befestigt ist, wobei die Trägeranordnung (10-410) zweckmäßigerweise Seitenträger zur Befestigung an dem Kraftfahrzeug (100) umfasst, zwischen denen sich der Querträger (20-420) erstreckt, wobei zweckmäßigerweise vorgesehen ist, dass sie mindestens einen Steckvorsprung (352, 452) oder mindestens eine Steckaufnahme (332; 432) zur Herstellung einer Steckverbindung mit einer Träger-Steckaufnahme (332; 432) oder einem Träger-Steckvorsprung (352, 452) der Trägeranordnung (10-410) zur Befestigung an dem Kraftfahrzeug (100) umfasst, wobei der Steckvorsprung des einen Teils in der Steckaufnahme (332; 432) des anderen Teils zweckmäßigerweise stoffschlüssig festgelegt ist.

12. Kupplungshalterung nach Anspruch 11, **dadurch gekennzeichnet, dass** sie eine zur flächigen Anlage an einer Träger-Kontaktfläche der Trägeranordnung (10-410) vorgesehene Kontaktfläche aufweist, vor die der Steckvorsprung (352, 452) vorsteht oder an der die Steckaufnahme (332; 432) eine Vertiefung bildet, und dass der Steckvorsprung (352, 452) der Kupplungshalterung (11, 13; 111; 211; 311; 411) oder der Trägeranordnung (10-410) als Steckzapfen oder die Steckaufnahme (332; 432) der Kupplungshalterung (11, 13; 111; 211; 311; 411) oder der Trägeranordnung (10-410) als Zapfenaufnahme ausgestaltet sind, die entlang einer Steckachse ineinander einsteckbar sind, so dass quer zu der Kontaktfläche erstreckende seitliche Widerlagerflächen des Steckvorsprungs (352, 452) und der Steckaufnahme (332; 432) in Eingriff sind.

13. Verfahren zur Herstellung einer Kupplungshalterung (11, 13; 111; 211; 311; 411) zum Halten eines Kuppelelements (93, 98) eines Kupplungsarms einer Anhängekupplung oder eines Lastenträgers (97) für ein Kraftfahrzeug (100), wobei die Kupplungshalterung (11, 13; 111; 211; 311; 411) eine durch eine Umfangswand (56) begrenzte Halteaufnahme (12) zum Halten des Kuppelelements (93, 98) und einen einen Rohrabschnitt (57) aufweisenden Rohrkörper (40-440) aufweist, der mindestens eine sich quer zu seiner Längserstreckungsrichtung (19) und entlang eines Innenumfangs oder Außenumfangs der Umfangswand (56) erstreckende, insbesondere eine Versteifung und/oder eine Formschlusskontur (17) für das Kuppelelement (93, 98) bildende Umfangskontur (54, 55) aufweist, wobei das Verfahren eine Herstellung der mindestens einen Umfangskontur (54, 55) als eine Umformungskontur (U1-U6) anhand einer Umformung eines Rohlings (R) umfasst, **gekennzeichnet durch**:
- Festes Verbinden mindestens eines ringförmigen Formschluss-Halteelements (60; 467) mit dem aus dem Rohling (R) hergestellten Bestandteil der Kupplungshalterung (11, 13; 111; 211; 311; 411).

14. Verfahren zur Herstellung der Kupplungshalterung (11, 13; 111; 211; 311; 411) gemäß Anspruch 13, **dadurch gekennzeichnet dass** die Umformung umfasst: Rollformen aus einem Rohr-Halbzeug und/oder Rollformen aus einer Platine mit anschließendem Längsschweißen einer Nut zur Bildung des Rohrkörpers (40-440) und/oder Warm- und/oder Kaltumformung in einem Werkzeug und/oder Warmumformung und Kaltumformung und/oder Hochdruckumformung, insbesondere von innen oder außen mit verschiedenen Medien, und/oder Kaltfließpressen.

## Claims

1. Coupling holder for holding a coupling element (93, 98) of a coupling arm of a trailer coupling or a load carrier (97) for a motor vehicle (100), with a holding location (12), bounded by a peripheral wall (56), for holding the coupling element (93, 98), with a tube body (40-440) with a tube section (57), which has at least one peripheral contour (54, 55) extending transversely to its direction of longitudinal extent (19) and along an inner periphery or outer periphery of the peripheral wall (56), in particular forming a reinforcement and/or an interlocking contour (17) for the coupling element (93, 98), wherein the peripheral contour or contours (54, 55) is or are a forming contour (U1-U6) made by forming from a blank (R), **characterised in that** it has at least one interlocking holding element (60; 467) which is firmly connected to the part of the coupling holder (11, 13; 111; 211; 311; 411) made from the blank (R).

2. Coupling holder according to claim 1, **characterised in that** the interlocking holding element or elements (60; 467) is or are made from a harder material than the blank (R) and/or that the interlocking holding element or elements (60; 467) is or are mounted in an interior of the holding location (12) or an on outer periphery of the tube section (57) which bounds the holding location (12) for the coupling element (93, 98).

3. Coupling holder according to any of claims 1 or 2, **characterised in that** the interlocking holding element or elements (60; 467) is or are fixed to the coupling holder (11, 13; 111; 211; 311; 411), in particular in respect of its direction of longitudinal extent (19) and/or transversely to the direction of longitudinal extent (19), by means of the forming contour or contours (U1-U6) or the peripheral contour (54, 55), and/or that the interlocking holding element or elements (60; 467) is or are fixed to a first side by a first peripheral contour (54), and to a side opposite the first side by a second peripheral contour (55) or between a first and a second forming contour (U1-U6) or peripheral contour (54, 55).

4. Coupling holder according to any of the preceding claims, **characterised in that** the forming contour or contours (U1-U6) or the peripheral contour (54, 55) extends or extend in an annular manner over the entire inner periphery or outer periphery of the coupling holder (11, 13; 111; 211; 311; 411) or over only part of the same, and/or that the peripheral contour or contours (54, 55) is or are designed and made for interlocking and/or frictional holding of the coupling element (93, 98).

5. Coupling holder according to any of the preceding claims, **characterised in that** the peripheral contour or contours (54, 55) protrudes or protrude inwards into the holding location (12) in the manner of a fold or flange (49; 149; 349) or protrude(s) outwards to form a collar of the holding location (12).

6. Coupling holder according to any of the preceding claims, **characterised in that** the peripheral contour or contours (54, 55) includes or include at least one wall section lying opposite an adjacent wall section of the tube body (40-440), in particular in flat or spot or linear contact with the adjacent wall section of the tube body (40-440).

7. Coupling holder according to any of the preceding claims, **characterised in that** the coupling holder (11, 13; 111; 211; 311; 411) has at least one hardened section or area and/or the tube body (40-440) includes a peripheral contour (54, 55) extending along its direction of longitudinal extent (19).

8. Coupling holder according to any of the preceding claims, **characterised in that** the blank (R) is a tube body (40-440) and/or a semi-finished product and/or is of metal plate, and/or the blank (R) is a plate.

9. Coupling holder according to any of the preceding claims, **characterised in that** the holding location (12) has or forms a plug-in socket (332; 432) for insertion of the coupling element (93, 98) which has or forms a plug-in projection (352, 452), and/or that the holding location (12) facilitates a form-fitting hold and/or a frictional hold of the coupling element (93, 98) to the holding location (12) or in the holding location (12).

10. Coupling holder according to any of the preceding claims, **characterised in that** the peripheral contour or contours (54, 55) includes or include a retaining flange (49; 149; 349) provided for mounting on the support assembly (10-410) and which protrudes beyond the outer periphery of a holding section of the coupling holder (11, 13; 111; 211; 311; 411) including the holding location (12).

11. Coupling holder according to any of the preceding claims, **characterised in that** it forms part of a support assembly (10-410) for a trailer coupling or a load carrier (97) and is fastened to a cross-member (20-420) provided for mounting at the rear of the motor vehicle (100), wherein the support assembly (10-410) expediently includes side members for mounting on the motor vehicle (100) and between which the cross-member (20-420) extends, wherein it is expediently provided that it includes at least one plug-in projection (352, 452) or at least one plug-in socket (332; 432) to create a plug connection with a member plug-in socket (332; 432) or a member plug-in projection (352, 452) of the support assembly (10-410) for mounting on the motor vehicle (100), wherein the plug-in projection of the one part is fixed into the plug-in socket (332; 432) of the other part, in particular by material bonding.

12. Coupling holder according to claim 11, **characterised in that** it has a contact face provided for flat contact with a member contact face of the support assembly (10-410), in front of which the plug-in projection (352, 452) protrudes or at which the plug-in socket (332; 432) forms a recess, and that the plug-in projection (352, 452) of the coupling holder (11, 13; 111; 211; 311; 411) or the support assembly (10-410) is designed as a plug-in pin, or the plug-in socket (332; 432) of the coupling holder (11, 13; 111; 211; 311; 411) or the support assembly (10-410) is designed as a pin holder, with both being able to be plugged together along an insertion axis, so that side thrust bearing surfaces of the plug-in projection (352, 452) and the plug-in socket (332; 432) extending transversely to the contact face are in engagement.

13. Method of producing a coupling holder (11, 13; 111; 211; 311; 411) for holding a coupling element (93, 98) of a coupling arm of a trailer coupling or a load carrier (97) for a motor vehicle (100), wherein the coupling holder (11, 13; 111; 211; 311; 411) has a holding location (12) bounded by a peripheral wall (56), for holding the coupling element (93, 98), and a tube body (40-440) with a tube section (57), which has at least one peripheral contour (54, 55) extending transversely to its direction of longitudinal extent (19) and along an inner periphery or outer periphery of the peripheral wall (56), in particular forming a reinforcement and/or an interlocking contour (17) for the coupling element (93, 98), wherein the method includes creation of the peripheral contour or contours (54, 55) as a forming contour (U1-U6) with the aid of forming from a blank (R), **characterised by**:
- firm connection of at least one annular interlocking holding element (60; 467) to the part of the coupling holder (11, 13; 111; 211; 311; 411) made from the blank (R).

14. Method of producing a coupling holder (11, 13; 111; 211; 311; 411) according to claim 13, **characterised in that** the forming comprises: roll forming from a semi-finished tube product and/or roll forming from a plate with subsequent longitudinal welding of a slot to form the tube body (40-440), and/or hot and/or cold forming in a mould and/or hot and cold forming and/or high-pressure forming, in particular from inside or outside with various media, and/or cold extrusion.

## Revendications

1. Support d'embrayage pour maintenir un élément d'embrayage (93, 98) d'un bras d'embrayage d'un attelage ou d'un porte-charge (97) pour un véhicule automobile (100), avec un logement de maintien (12) délimité par une paroi périphérique (56) pour maintenir l'élément d'embrayage (93, 98), avec un corps tubulaire (40-440) présentant une section tubulaire (57), qui présente au moins un contour périphérique (54, 55) s'étendant transversalement par rapport à sa direction d'extension longitudinale (19) et le long d'une circonférence intérieure ou circonférence extérieure de la paroi périphérique (56), formant en particulier un raidisseur et/ou un contour à concordance de formes (17) pour l'élément d'embrayage (93, 98), dans lequel l'au moins un contour périphérique (54, 55) est un contour de formage (U1-U6) formé par un formage à partir d'une pièce brute (R), **caractérisé en ce qu'**il présente au moins un élément de maintien à concordance de formes (60 ; 467) annulaire qui est relié fermement à l'élément du support d'embrayage (11, 13 ; 111 ; 211 ; 311 ; 411) fabriqué à partir de la pièce brute (R).

2. Support d'embrayage selon la revendication 1, **caractérisé en ce que** l'au moins un élément de maintien à concordance de formes (60 ; 467) est constitué d'un matériau plus dur que la pièce brute (R) et/ou que l'au moins un élément de maintien à concordance de formes (60 ; 467) est disposé dans un intérieur du logement de maintien (12) ou sur une circonférence extérieure de la section tubulaire (57) qui délimite le logement de maintien (12) pour l'élément d'embrayage (93, 98).

3. Support d'embrayage selon l'une des revendications 1 ou 2, **caractérisé en ce que** l'au moins un élément de maintien à concordance de formes (60 ; 467) est fixé au support d'embrayage (11, 13 ; 111 ; 211 ; 311 ; 411) par l'au moins un contour de formage (U1-U6) ou contour périphérique (54, 55), en particulier par rapport à sa direction d'extension longitudinale (19) et/ou transversalement par rapport à la direction d'extension longitudinale (19), et/ou que l'au moins un élément de maintien à concordance de formes (60 ; 467) est fixé à un premier côté par un premier contour périphérique (54) et à un côté opposé au premier côté par un deuxième contour périphérique (55) ou entre un premier et un deuxième contour de formage (U1-U6) ou contour périphérique (54, 55).

4. Support d'embrayage selon l'une des revendications précédentes, **caractérisé en ce que** l'au moins un contour de formage (U1-U6) ou contour périphérique (54, 55) s'étend de façon circulaire sur toute la circonférence intérieure ou circonférence extérieure du support d'embrayage (11, 13 ; 111 ; 211 ; 311 ; 411) ou uniquement sur une partie de celui-ci et/ou que l'au moins un contour périphérique (54, 55) est conçu et formé pour maintenir l'élément d'embrayage (93, 98) par concordance de formes et/ou en force.

5. Support d'embrayage selon l'une des revendications précédentes, **caractérisé en ce que** l'au moins un contour périphérique (54, 55) dépasse vers l'intérieur à la manière d'un pli ou d'un flasque (49 ; 149 ; 349) dans le logement de maintien (12) ou dépasse vers l'extérieur en formant un collet du logement de maintien (12).

6. Support d'embrayage selon l'une des revendications précédentes, **caractérisé en ce que** l'au moins un contour périphérique (54, 55) comprend au moins une section de paroi qui est opposée à une section de paroi adjacente du corps tubulaire (40-440), en particulier plaquée contre la section de paroi adjacente du corps tubulaire (40-440) en contact à plat ou sous forme de points ou sous forme de lignes.

7. Support d'embrayage selon l'une des revendications précédentes, **caractérisé en ce que** le support d'embrayage (11, 13 ; 111 ; 211 ; 311 ; 411) présente au moins une partie ou une région durcie et/ou le corps tubulaire (40-440) comprend un contour périphérique (54, 55) s'étendant le long de sa direction d'extension longitudinale (19).

8. Support d'embrayage selon l'une des revendications précédentes, **caractérisé en ce que** la pièce brute (R) est un corps tubulaire (40-440) et/ou un produit semi-fini et/ou est en tôle métallique et/ou la pièce brute (R) comprend une plaque.

9. Support d'embrayage selon l'une des revendications précédentes, **caractérisé en ce que** le logement de maintien (12) présente ou forme un logement enfichable (332 ; 432) pour l'insertion de l'élément d'embrayage (93, 98) présentant ou formant une saillie enfichable (352, 452) et/ou le logement de maintien (12) permet un maintien à concordance de formes et/ou un maintien en force de l'élément d'embrayage (93, 98) au niveau du logement de maintien (12) ou dans le logement de maintien (12).

10. Support d'embrayage selon l'une des revendications précédentes, **caractérisé en ce que** l'au moins un contour périphérique (54, 55) comprend un flasque de maintien (49 ; 149 ; 349) prévu pour être fixé au dispositif de support (10-410), qui dépasse vers l'extérieur devant la circonférence extérieure d'une section de maintien du support d'embrayage (11, 13; 111 ; 211 ; 311 ; 411) comprenant le logement de maintien (12).

11. Support d'embrayage selon l'une des revendications précédentes, **caractérisé en ce qu'**il constitue un élément d'un dispositif de support (10-410) pour un attelage ou un porte-charge (97), et est fixé à une traverse (20-420) prévue pour être fixée à l'arrière du véhicule automobile (100), dans lequel le dispositif de support (10-410) comprend de manière appropriée des supports latéraux destinés à être fixés au véhicule automobile (100), entre lesquels s'étend la traverse (20-420), dans lequel il est prévu de manière appropriée qu'il comprenne au moins une saillie enfichable (352, 452) ou au moins un logement enfichable (332 ; 432) pour la réalisation d'une liaison enfichable avec un logement enfichable de support (332 ; 432) ou une saillie enfichable de support (352, 452) du dispositif de support (10-410) en vue d'une fixation au véhicule automobile (100), dans lequel la saillie enfichable de la première partie est fixée de manière appropriée par combinaison de matière dans le logement enfichable (332 ; 432) de l'autre partie.

12. Support d'embrayage selon la revendication 11, **caractérisé en ce qu'**il présente une surface de contact prévue pour venir en appui à plat contre une surface de contact de support du dispositif de support (10-410), devant laquelle dépasse la saillie enfichable (352, 452) ou au niveau de laquelle le logement enfichable (332 ; 432) forme un creux, et que la saillie enfichable (352, 452) du support d'embrayage (11, 13; 111 ; 211 ; 311 ; 411) ou du dispositif de support (10-410) est conçue en tant que tenon enfichable ou le logement enfichable (332 ; 432) du support d'embrayage (11, 13 ; 111 ; 211 ; 311 ; 411) ou du dispositif de support (10-410) est conçu en tant que logement de tenon, qui peuvent être insérés l'un dans l'autre le long d'un axe d'enfichage de telle sorte que des surfaces latérales de culées, s'étendant transversalement à la surface de contact, de la saillie enfichable (352, 452) et du logement enfichable (332 ; 432) sont en prise.

13. Procédé de fabrication d'un support d'embrayage (11, 13 ; 111 ; 211 ; 311 ; 411) pour maintenir un élément d'embrayage (93, 98) d'un bras d'embrayage d'un attelage ou d'un porte-charge (97) pour un véhicule automobile (100), dans lequel le support d'embrayage (11, 13 ; 111 ; 211 ; 311 ; 411) présente un logement de maintien (12) délimité par une paroi périphérique (56) pour maintenir l'élément d'embrayage (93, 98) et un corps tubulaire (40-440) présentant une section tubulaire (57) qui présente au moins un contour périphérique (54, 55) qui s'étend transversalement à sa direction d'extension longitudinale (19) et le long d'une circonférence intérieure ou circonférence extérieure de la paroi périphérique (56), formant en particulier un raidisseur et/ou un contour à concordance de formes (17) pour l'élément d'embrayage (93, 98), dans lequel le procédé comprend une fabrication de l'au moins un contour périphérique (54, 55) en tant que contour de formage (U1-U6) à l'aide d'un formage d'une pièce brute (R), **caractérisé par** :
- le raccordement ferme d'au moins un élément de maintien à concordance de formes (60 ; 467) annulaire avec l'élément du support d'embrayage (11, 13 ; 111 ; 211 ; 311 ; 411) fabriqué à partir de la pièce brute (R).

14. Procédé de fabrication du support d'embrayage (11, 13 ; 111 ; 211 ; 311 ; 411) selon la revendication 13, **caractérisé en ce que** le formage comprend : le roulage à partir d'un produit semi-fini tubulaire et/ou le roulage à partir d'une plaque avec soudage longitudinal ultérieur d'une rainure pour former le corps tubulaire (40-440) et/ou le formage à chaud et/ou à froid dans un outil et/ou le formage à chaud et le formage à froid et/ou le formage à haute pression, en particulier de l'intérieur ou de l'extérieur avec différents milieux et/ou l'extrusion à froid.
